# FASCICULE DE BREVET EUROPEEN

(11) **EP 3 088 144 B1**
(45) Date de publication et mention de la délivrance du brevet: **12.06.2024**
(21) Numéro de dépôt: 16167537.6
(22) Date de dépôt: 28.04.2016
(51) Int. Cl.: B25J 15/00

(54) **SOLUTION DE VARIATION DE L'ESPACEMENT DANS UN DISPOSITIF D'AJUSTEMENT**
LÖSUNG DER ÄNDERUNG DES ABSTANDS IN EINER ANGLEICHUNGSVORRICHTUNG
SOLUTION FOR VARYING THE SPACING IN AN ADJUSTMENT DEVICE

(30) Priorité: 30.04.2015 FR 1553925
(43) Date de publication de la demande: 02.11.2016
(73) Titulaire: Sidel Participations, 76930 Octeville Sur Mer (FR)
(72) Inventeur: BRETAUDEAU, Philippe, 85290 SAINT-LAURENT-SUR-SEVRE (FR); COLLET, Sébastien, 85290 SAINT-LAURENT-SUR-SEVRE (FR)
(74) Mandataire: Sidel Group

(56) Documents cités:
- FR-A1- 2 557 070
- FR-A1- 2 971 497
- JP-A- 2000 015 368
- JP-U- S6 171 392

## Description

La présente invention relève du domaine des équipements pour les lignes industrielles de conditionnement de produits, en particulier des équipements pour ajuster les outils aux différentes tailles de produits, et a pour objet, d'une part, un dispositif d'ajustement, ainsi qu'une tête de préhension et un moyen de convoyage munis d'une telle tête, et, d'autre part, un procédé mettant en oeuvre ce dispositif.

Dans ce domaine, les produits sont généralement du type bouteilles, flacons, bidon, etc. Au cours du processus de conditionnement, les produits sont manipulés pour un décaissage, un convoyage, un encaissage, etc. Les outils peuvent être des convoyeurs, des robots préhenseurs, etc. Les outils doivent donc être capables de traiter correctement des produits de dimensions différences, en particulier vus de haut.

Ainsi, pour l'étape particulière de circulation en couloirs délimités par des parois, WO2012056145 divulgue par exemple, une solution de pantographe pour ajuster la largeur des couloirs à la taille des produits. La construction géométrique même du pantographe assure que les couloirs sont toujours écartés d'une même dimension. Un tel montage n'est toutefois pas suffisamment précis pour certaines applications précises, en particulier dans un outillage qui est une tête de préhension de produits qui doit emporter et soulever ces produits.

On connait aussi, par exemple, EP2440482, qui divulgue un principe à base d'écrou et vis sans fin pour déplacer de façon successive, à partir de la rotation d'un arbre, des parois par rapport à une autre paroi fixe. Un des inconvénients est que la largeur des couloirs est adaptée à la taille des produits, mais pas leur pas, puisqu'une paroi sur deux reste immobile. L'empattement global est donc toujours essentiellement le même et ne diminue pas pour des produits plus petits, etc.

Une autre solution d'écartement est par exemple divulguée dans FR2971497, à partir de vérins verrouillables, montés entre deux blocs successifs sur lesquels sont montés des organes de préhension de produit. Une telle solution est néanmoins relativement couteuse, compte tenu des équipements qu'elle met en oeuvre, compliquée à contrôler à l'unité et lourde. Un appareil de déchargement pour récupérer et transporter des plaques traitées par une machine de traitement des plaques est par ailleurs divulgué dans JP-2000015368.

De façon générale, pour une solution de préhension, une solution de convoyage, ou autres, il s'agit donc d'adapter, par rapport aux dimensions des produits, le pas ou l'éloignement relatif entre des éléments qui interagissent directement ou non avec les produits : organes de préhension, parois, guides, etc.

L'invention vise ainsi à proposer une solution d'ajustement aux différents formats de produits qui soit simple, peu onéreuse, précise, et/ou légère. En effet, en particulier pour des têtes de préhension de décaissage, l'ajustement doit être précis, puisque ce genre de tête manipule les produits par le haut et les soulève. Un manque de précision peut alors amener à des chutes de produit, des casses de produit, ou encore des produits non saisis. La solution doit idéalement permettre un contrôle automatisé.

Pour ce faire, l'invention propose d'assurer l'écartement entre deux éléments successifs à l'aide d'un arbre ou tige filetée, reproduisant ainsi un montage du type vis-écrou, où un des deux éléments forme la tête de vis, l'autre formant l'écrou.

L'invention a ainsi pour objet un dispositif d'ajustement, comprenant au moins deux blocs côte à côte, mobiles l'un par rapport à l'autre dans une direction d'extension et destinés à coopérer, directement ou indirectement, avec des produits d'une ligne industrielle de traitement.

Ce dispositif comprend un moyen d'entraînement, pour régler la position relative d'au moins deux blocs, ledit moyen d'entraînement comprenant, pour chaque paire de deux blocs successifs, un arbre monté par une de ses extrémités dans l'un des deux blocs en y étant maintenu axialement et libre en rotation, et coopérant avec l'autre bloc par filetage au niveau de son autre extrémité. Ce dispositif est caractérisé en ce que il comprend au moins trois blocs, reliés entre eux par des arbres dont le filetage a le même pas, le moyen d'entraînement assurant un même entraînement des arbres montés entre deux blocs successifs où le moyen d'entraînement comprend une tige tournante qui engrène les arbres.

L'invention couvre aussi l'utilisation d'un tel dispositif dans des équipements particuliers. Ainsi, l'invention a aussi pour objet une tête de préhension de produits, pour être montée sur un manipulateur type robot et qui saisit des produits alignés les uns à côté des autres, comprenant un ensemble de préhenseurs pour saisir simultanément les produits, tête de préhension.

Cette tête de préhension est caractérisée en ce que
elle comprend un dispositif d'ajustement tel que défini plus haut, où les préhenseurs sont montés sur les blocs.

L'invention a aussi pour objet un moyen de convoyage de produits en colonnes, les uns derrière les autres, entre des parois délimitant ensemble plusieurs colonnes parallèles s'étendant dans le sens de convoyage, au sein d'une ligne de conditionnement de produits.

Ce moyen de convoyage est caractérisé en ce que
il comprend un dispositif d'ajustement tel que décrit plus haut, où les parois sont montées sur les blocs, la direction d'extension se trouvant perpendiculaire au sens de convoyage

L'invention a aussi pour objet une méthode mise en oeuvre par ce dispositif, à savoir un procédé d'ajustement relatif en position de blocs positionnés les uns à côté des autres, visant à garantir un écartement relatif homogène dans une direction d'extension entre deux blocs successifs destinés à coopérer directement ou non avec des produits d'une ligne industrielle de traitement.

Selon ce procédé la modification de la position entre deux blocs successifs se fait par rotation d'un arbre monté entre eux en butée axiale dans l'un et formant un assemblage fileté avec l'autre. Ce procédé est caractérisé en ce que les arbres séparant deux blocs successifs ont le même pas et, lors du réglage, sont entraînés avec la même amplitude de mouvement de rotation, de sorte que la distance entre deux blocs successifs est la même.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre le principe d'interaction entre deux blocs successifs, entre lesquels un arbre est monté ;
- la figure 2 schématise le principe avec plusieurs blocs successifs ;
- la figure 3 représente une tête de préhension montée sur un robot manipulateur ;
- la figure 4 illustre un moyen de convoyage par couloirs.

L'invention a donc tout d'abord comme objet un dispositif d'ajustement 1, comprenant au moins deux blocs 2 côte à côte, mobiles l'un par rapport à l'autre dans une direction d'extension 11 et destinés à coopérer, directement ou indirectement, avec des produits 7 d'une ligne industrielle de traitement. Le dispositif d'ajustement 1 comprend ainsi au moins deux blocs 2, et notamment au moins trois blocs 2, dont il convient de contrôler l'écartement l'un par rapport à l'autre. Les blocs 2 sont ainsi alignés les uns à côté des autres dans une direction d'extension 11 et sont donc déplaçables l'un par rapport au suivant le long de cette direction d'extension 11.

Les blocs 2 successifs sont généralement à positionner l'un par rapport à l'autre d'un écartement identique à chaque fois. En effet, les blocs 2 coopèrent avec les produits 7 en cours de traitement dans la ligne de conditionnement qui intègre le dispositif 1, par exemple en les espaçant eux-mêmes, en maintenant des parois 9 de séparation, ou encore en portant des équipements qui viennent interagir avec les produits 7 comme des pinces de préhension 10, par exemple.

Il est donc nécessaire de modifier la position relative des blocs 2 en fonction de la dimension des produits 7 traités, en particulier pour s'adapter à leur largeur. Les produits 7 sont en effet généralement positionnés les uns à côté des autres et les blocs 2 doivent pouvoir reproduire ce positionnement relatif de façon la plus précise possible ou au moins conditionner de façon précise leur position. Les blocs 2 doivent généralement être placés avec le même écartement entre deux blocs 2 successifs.

Ainsi, selon l'invention, le dispositif d'ajustement 1 comprend un moyen d'entraînement 4, pour régler la position relative d'au moins deux blocs 2, ledit moyen d'entraînement 4 comprenant, pour chaque paire de deux blocs 2 successifs, un arbre 3 monté par une de ses extrémités dans l'un des deux blocs 2 en y étant maintenu axialement et libre en rotation, et coopérant avec l'autre bloc 2 par filetage au niveau de son autre extrémité, de sorte que la rotation dudit arbre 3 a pour effet de modifier la distance entre les deux blocs 2 grâce à ce filetage.

Deux blocs 2 l'un à côté de l'autre forment donc un couple assimilable à une vis et un écrou. Le bloc 2 dans lequel l'arbre 3 fileté est monté libre en rotation, dit premier bloc 2, forme donc la tête de vis, l'arbre 3 fileté forme la partie de filetage de cette vis, et le bloc 2 dans lequel l'arbre 3 est monté avec une liaison filetage, ou deuxième bloc 2, forme l'écrou. De la même manière que, de façon générale, la rotation d'une tige filetée rapproche/éloigne l'écrou de la tête de la vis, la rotation de l'arbre 3 aura pour effet de rapprocher/éloigner le deuxième bloc 2 du premier.

L'unique possibilité de mouvement entre deux blocs 2 successifs est une translation le long de la direction d'extension 11. L'arbre 3 est alors monté libre en rotation dans le premier bloc 2 : il peut tourner librement dans le premier bloc 2, mais est bloqué dans le sens d'une translation. A l'inverse, pour que la rotation de l'arbre 3 provoque effectivement une translation au niveau du deuxième bloc 2, il est monté dans ce dernier avec une relation de filetage taraudage : la rotation de l'arbre 3 au coeur du bloc 2 bloqué en rotation provoque donc une translation.

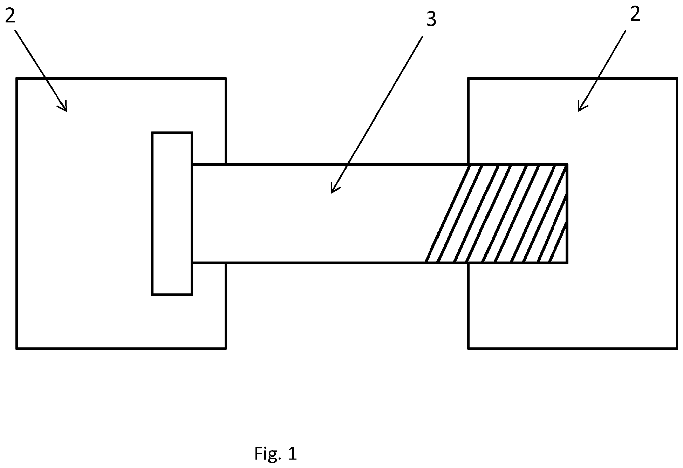

La figure 1 illustre ce principe : la distance séparant deux blocs 2 successifs dépend en effet de la rotation de l'arbre 3, ainsi, bien sûr, que du pas du filetage dans le deuxième bloc 2.

Selon une caractéristique additionnelle possible, le dispositif d'ajustement 1 comprend une glissière 12 parallèle à l'arbre 3 et sur laquelle les blocs 2 sont montés mobiles. Cette glissière 12 est parallèle à la direction d'extension 11 et assure notamment que le seul degré de liberté entre les blocs 2 soit une translation, le long de cette direction. La glissière 12 est donc fixe sur le bâti 14 et les blocs 2 coulissent l'un par rapport à l'autre de façon guidée par cette glissière 12.

Dans le mode de réalisation selon l'invention, le dispositif d'ajustement 1 comprend au moins trois blocs 2, reliés entre eux par des arbres 3 dont le filetage a le même pas, le moyen d'entraînement 4 assurant un même entraînement des arbres 3 montés entre deux blocs 2 successifs, garantissant une rotation de même amplitude pour chaque arbre 3. Le moyen d'entraînement 4 agit donc sur les arbres 3 pour les faire tourner de façon contrôlée et provoquer ainsi la modification souhaitée de la position réciproque des blocs 2. Les arbres 3 ont tous le même pas et subissent une rotation de même amplitude. On comprend que, comme le dispositif 1 a au moins trois blocs 2, au moins l'un deux est relié à deux blocs 2.

L'un des blocs 2, bloc 2 de référence, est relié de façon fixe au bâti 14. Dans le cas où le dispositif d'ajustement 1 n'a qu'un seul autre bloc 2, sa position est alors directement dépendante de la rotation de l'arbre 3 qui les relie. Dans les cas où plusieurs blocs 2 sont montés en série l'un à la suite de l'autre, leur position dépend, de façon cumulative, de la rotation de chaque arbre 3 qui les relie au bloc 2, fixé sur le bâti 14. En effet, la position du troisième bloc 2 par rapport au premier dépendra de la rotation de l'arbre 3 entre le premier bloc 2 et le deuxième, ainsi que de la rotation de l'arbre 3 entre le deuxième et le troisième, etc.

Pour assurer un espacement homogène entre les blocs 2, il est donc préférable de prévoir des pas qui sont les mêmes entre les différents arbres 3, ainsi qu'un angle de rotation qui est le même. Avoir le même espacement entre deux blocs 2 successifs se fait alors en générant, avec le moyen d'entraînement 4, le même angle de rotation pour tous les arbres 3.

Pour ce faire, selon une caractéristique additionnelle possible, le moyen d'entraînement 4 comprend une tige 5 tournante qui engrène les arbres 3, notamment par l'intérieur. La tige 5 est donc solidaire des arbres 3 de sorte que, par engrenage, sa rotation autour de son propre axe entraîne celle des arbres 3 autour de leur propre axe, ces axes étant préférablement parallèles. La rotation de la tige 5 provoque donc la même rotation de tous les arbres 3.

Selon une autre caractéristique additionnelle possible, la tige 5 s'étend axialement au sein des arbres 3, et les engrène grâce à des cannelures 13 correspondantes, aménagées à l'intérieur des arbres 3 et à la périphérie de la tige 5, préférablement sur toute sa longueur, la tige 5 étant mobile axialement au sein des arbres 3 tout en maintenant l'engrènement.

Ainsi, les arbres 3 sont alignés les uns à la suite des autres dans la direction d'extension 11, et traversés par la tige 5 qui les engrène. Les extrémités des arbres 3 sont prises, chacune, dans un bloc 2, et les blocs 2 sont, par conséquent, eux aussi traversés par la tige 5, le long de laquelle ils se déplacent sous l'effet de la rotation des arbres 3. Les blocs 2 reliés à deux autres présentent ainsi un passage débouchant pour être traversés par la tige 5 de part en part.

Les arbres 3 prennent ainsi la forme de douilles creuses, cannelées à l'intérieur pour leur interaction avec la tige 5, filetées à l'extérieur au niveau d'une de leur extrémité, et pourvu d'une butée axiale du type nervure ou rainure, au niveau de leur autre extrémité.

Les arbres 3 peuvent coulisser le long de la tige 5, les cannelures 13 assurant une continuité de l'engrènement entre ladite tige 5 et les arbres 3. Cette liberté de translation permet ainsi à un arbre 3, qui n'est pas monté par l'une ou l'autre de ces extrémité dans un bloc 2 lié au bâti 14, de suivre le déplacement axial du bloc 2 dans lequel il est ancré tout en restant engrené en rotation par la tige 5.

Par rapport au bâti 14, la tige 5 est donc préférablement libre en rotation mais retenue en translation autour de son propre axe. Les blocs 2 et les arbres 3 se déplacent quant à eux le long de cette tige 5.

Dans certains modes de réalisation avantageux, le dispositif d'entraînement 4 comprend, en outre, un moteur 15 pour provoquer la rotation de l'au moins un arbre 3, en agissant préférablement par entraînement en rotation de la tige 5, éventuellement en entraînant directement la tige 5 tournante. De façon préférée, l'arbre 3 entraîne la tige 5, éventuellement après un engrenage de démultiplication, la tige entraînant par la suite, grâce aux nervures longitudinales que forment ses cannelures 13, les différents arbres 3. L'arbre 3 est donc monté sur le bâti 14.

Enfin, dans des réalisations avantageuses, le dispositif d'ajustement 1 comprend au moins trois blocs 2, alignés, l'un des blocs 2 servant de référence et demeurant immobile par rapport au bâti 14 lors d'une modification de l'écartement, ledit bloc 2 de référence recevant deux arbres 3 en vis-à-vis qui sont bloqués en translation axialement mais libres en rotation, le bloc 2 de référence étant notamment environ au milieu de la série de blocs 2.

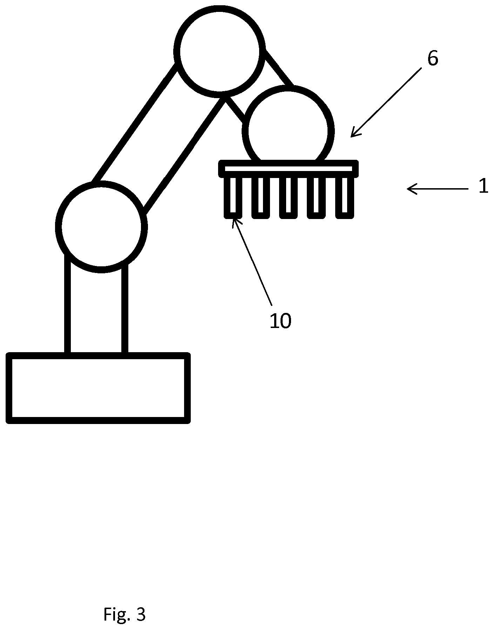

Comme illustrée en figure 3, l'invention a aussi pour objet une tête de préhension de produits 7, pour être montée sur un manipulateur type robot et qui saisit des produits 7 alignés les uns à côté des autres, comprenant un ensemble de préhenseurs 10 pour saisir simultanément les produits 7, comme, par exemple, des paires de coussins gonflable entre lesquels un produit 7 peut être tenu.

Cette tête de préhension sert notamment à saisir puis déplacer simultanément plusieurs produits 7. Il est donc nécessaire d'ajuster la position des préhenseurs à la position des produits 7 à saisir. Ainsi, la tête de préhension comprend un dispositif d'ajustement 1 tel que décrit ci-dessus, les préhenseurs étant montés sur les blocs 2.

Le bâti 14 forme alors la carcasse de la tête de préhension qui vient être montée sur le manipulateur, en particulier à l'extrémité d'un bras.

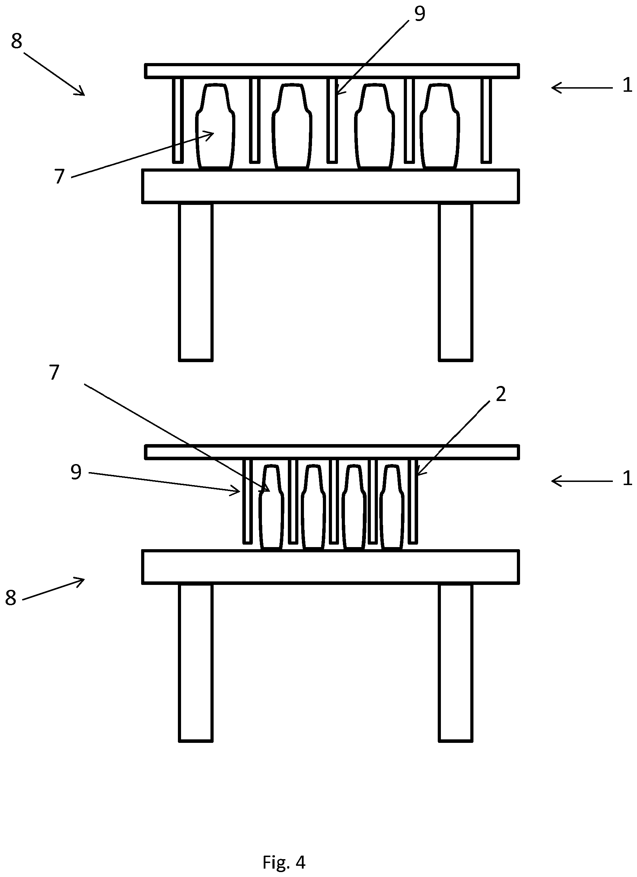

Comme le montre la figure 4, l'invention a aussi pour objet un moyen de convoyage 8 de produits 7 en colonnes, les uns derrière les autres, entre des parois 9 délimitant ensemble plusieurs colonnes parallèles s'étendant dans le sens de convoyage, au sein d'une ligne de conditionnement de produits 7. Une telle circulation en couloirs est par exemple utile à l'entrée d'une unité qui répartir les produits 7 en lots qui présentent au moins une rangée de plusieurs produits qui s'étend transversalement à la direction d'avance des produits 7. La taille des couloirs doit donc être ajustée aux dimensions du produit 7 qui y circule. En effet, un couloir trop grand ne guide pas suffisamment bien les produits 7.

A cet effet, le moyen de convoyage 8 utilise un dispositif d'ajustement tel que décrit ci-dessus, où les parois 9 sont montées sur les blocs 2 pour les déplacer au-dessus de la surface du tapis sur lequel se tiennent les produits 7.

L'invention a aussi pour objet un procédé mettant en oeuvre le dispositif tel que décrit ci-dessus, la tête de préhension décrite ci-dessus ou le moyen de convoyage décrit ci-dessus, à savoir un procédé d'ajustement relatif en position de blocs 2 positionnés les uns à côté des autres, visant à garantir un écartement relatif homogène dans une direction d'extension 11 entre deux blocs 2 successifs destinés à coopérer directement ou non avec des produits 7 d'une ligne industrielle de traitement, lesdits blocs 2 étant positionnés les uns à côté des autres dans une direction d'extension 11.

Selon l'invention, la modification de la position entre deux blocs 2 successifs se fait par rotation d'un arbre 3 monté entre eux en butée axiale dans l'un et formant un assemblage fileté avec l'autre, la rotation de l'arbre 3 provoquant un déplacement relatif des deux blocs 2 qu'il relie avec le même principe qu'un montage vis écrou.

Dans le mode de réalisation de l'invention, les arbres 3 séparant deux blocs 2 successifs ont le même pas et, lors du réglage, sont entraînés avec la même amplitude de mouvement de rotation, de sorte que la distance entre deux blocs 2 successifs est la même.

Dans le mode de réalisation illustré en particulier en figure 3, le dispositif d'ajustement 1 est monté dans une tête de préhension 6 pour saisir des produits 7 du type bouteilles, disposées sur une palette en couches comprenant chacune des rangées et des lignes de produits. Les produits 7 sont organisés en matrice, préférablement sans imbrication par quinconce. La tête de préhension 6 doit donc saisir par le haut simultanément autant de produits 7 que possible, idéalement toute une couche. La tête de préhension 6 est montée à l'extrémité d'un robot manipulateur multiaxe, et sert donc à une fonction de dépalletisation, où les produits 7 sont saisis depuis une couche sur une palette et sont ensuite déposés par exemple sur un convoyeur, qui va préférablement transformer le flux en un flux de produits 7 unifilaire.

La tête de préhension 6 vient donc saisir les produits 7 par leur partie supérieure, par exemple avec un principe d'étau ou pince plus ou moins souple. La tête de préhension 6 est donc munie de moyens de préhension 10, ou préhenseurs 10, qui coopèrent avec au moins un produit 7 à chaque fois, et préférablement une rangée complète à chaque fois. Les produits 7 étant au contact les uns des autres lorsqu'ils sont organisés en couche sur une palette, il est nécessaire de modifier la position réciproque des moyens de préhension 10 à chaque changement de format de produits 7.

Dans le cas illustré, chaque moyen de préhension 10 coopère avec une rangée de produits 7 et leur écartement respectif doit donc, pour chaque format, reproduire l'écartement respectif de l'axe vertical des produits 7. En outre, l'écartement doit nécessairement être le même entre chaque paire de moyens de préhension 10 côte à côte, puisque les produits 7 sont les mêmes. Il est donc nécessaire de contrôler avec précision l'écartement des moyens de préhension 10 pour reproduire l'organisation matricielle des produits 7.

Pour ce faire, chaque moyen de préhension 10 est monté sur un bloc 2 d'un dispositif d'ajustement 1 selon l'invention. Les blocs 2 sont alignés les uns à côté des autres dans une direction d'extension 11 et mobiles le long de cette direction. La direction d'extension 11 correspond à une rangée ou une ligne de produits 7 sur une couche. Chaque bloc 2 est relié mécaniquement au bloc 2 ou aux blocs 2 à côté de lui.

En effet, entre chaque paire de blocs 2 successifs est monté un arbre 3 qui les relie. Cet arbre 3 est monté dans un premier bloc 2, à gauche sur la figure 1, de façon à être libre en rotation autour de son axe, mais bloqué en translation le long de son axe. Ainsi, la rotation de l'arbre 3 autour de son axe n'a pas d'effet sur le premier bloc 2. Par contre, un déplacement le long de cet axe, soit du premier bloc 2 soit de l'arbre 3, s'accompagne du même mouvement pour l'autre bloc 2 dans lequel l'arbre 3 est fixé. Par conséquent, tirer ou pousser axialement l'arbre 3 permet de tirer ou pousser le premier bloc 2 ou le deuxième bloc 2.

Un mouvement axial de l'arbre 3 par rapport au deuxième bloc 2, à droite de la figure 1, est provoqué par sa rotation, autour de son axe, au sein dudit deuxième bloc 2. En effet, l'arbre 3 est monté dans le deuxième bloc 2 par un filetage / taraudage : l'arbre 3 présente un filetage circonférentiel extérieur au moins dans sa partie qui coopère avec le deuxième bloc 2, alors que le deuxième bloc 2 présente un taraudage correspondant. Ainsi, une rotation axiale de l'arbre 3 dans le deuxième bloc 2 aura pour effet de provoquer une translation de l'arbre 3 le long de son axe par rapport à ce même bloc 2. On comprend que le deuxième bloc 2, entraîné par cet arbre 3 en translation axiale mais non entraîné en rotation axiale, se rapproche ou s'éloigne alors du premier bloc 2.

La rotation d'un arbre 3 permet donc de modifier la position relative entre deux blocs 2 successifs avec un principe d'écrou se déplaçant axialement le long d'une tige filetée tournante sur laquelle il est monté. L'ajustement se fait donc en série, ce qui signifie que la rotation du premier arbre 3 déplace non seulement le deuxième bloc 2 par rapport au premier, mais, aussi tous les blocs 2 suivants, reliés par de tels arbres 3 au deuxième bloc 2. Le troisième bloc 2, sans rotation de l'arbre 3 qui le lie au second bloc 2 est déplacé par ce dernier par rapport au premier bloc 2 grâce à l'arbre 3 qui coopère avec l'un et l'autre. L'éventuelle rotation de l'arbre 3 qui relie le troisième bloc 2 au deuxième bloc 2 crée alors, pour le troisième bloc 2, un déplacement qui s'additionne à celui provoqué par la rotation de l'arbre 3 entre le premier bloc 2 et le deuxième bloc 2. La superposition des déplacements provoqués par la rotation des arbres 3 successifs assure ainsi la possibilité de reproduire une configuration qui correspond exactement au pas des produits 7 dans leurs différentes configurations, et non seulement à leur taille.

Autrement dit, le déplacement à partir du troisième bloc 2 provient de l'addition, d'une part, de la translation provoquée grâce au filetage par la rotation de l'arbre 3 qui le lie au bloc 2 suivant en direction du bloc 2 de référence fixe par rapport au bâti 14, et, d'autre part, de la translation dudit bloc 2 suivant qui emmène avec lui ledit arbre 3. La translation dudit bloc 2 suivant peut à son tour provenir d'une telle addition.

La distance entre deux blocs 2 successifs ne dépend donc que de la rotation de l'arbre 3 qui les lie, alors que le déplacement d'un bloc 2 particulier par rapport au bloc 2 de référence est obtenu de façon cumulative par les déplacements provoqués grâce au filetage par la rotation de chaque arbre 3 qui se trouve entre ledit bloc 2 particulier et le bloc 2 de référence.

En effet, la distance qui sépare deux blocs 2 successifs dépend d'un moyen monté entre eux et embarqué, qui est donc entraîné axialement par le mouvement de l'un pour entraîner l'autre. L'arbre 3 entre deux blocs 2 conditionne donc leur position relative l'un par rapport à l'autre, la position de l'un dépendant éventuellement de la manoeuvre d'un autre arbre 3 qui le lie à un autre bloc 2 et ainsi de suite.

L'ancrage par filetage de l'arbre 3 dans un bloc 2 permet donc, même sans qu'il tourne, de répercuter sur lui le mouvement de translation du bloc 2 dans lequel il est retenu à son autre extrémité.

On comprend que la distance qui sépare deux blocs 2 successifs dépend uniquement de la rotation de l'arbre 3 qui les sépare. Ainsi, pour obtenir facilement un écartement homogène entre les paires de blocs 2 successifs, il est préférable d'avoir des arbres 3 qui ont tous le même pas et de leur imposer ensuite une rotation de même amplitude.

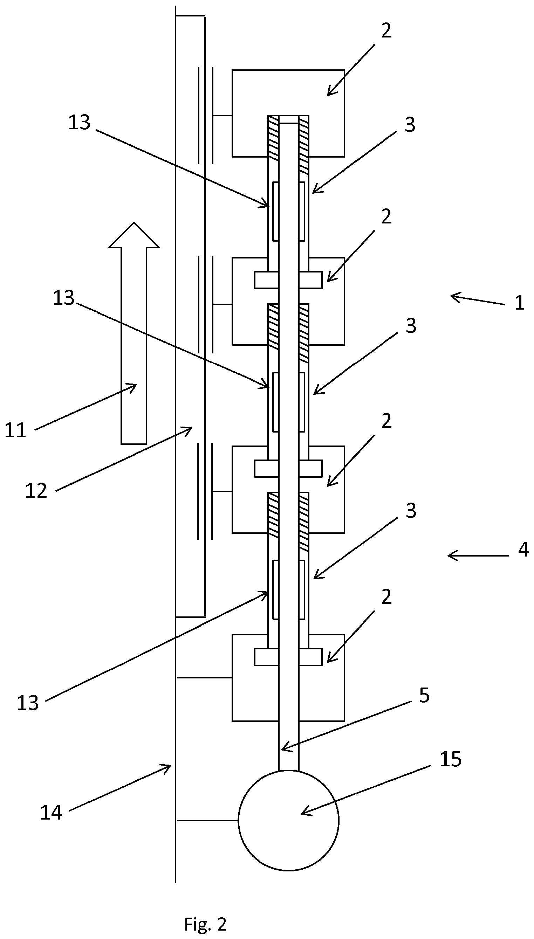

Comme le montre la figure 2, les blocs 2 sont ainsi tous alignés les uns à côté des autres le long d'une direction d'extension 11 et montés sur une glissière 12, alignée dans ladite direction, et les arbres 3 successifs sont alignés. Les arbres 3 sont entraînés en rotation de façon homogène au sein du moyen d'entraînement 4 tel que décrit ci-dessous. Les arbres 3 sont creux et traversés par une tige 5 qui leur est coaxiale et qui les traverse tous les uns après les autres. Cette tige 5 coopère par sa périphérie avec l'intérieur des arbres 3 grâce à des cannelures 13. Ainsi, grâce à ces cannelures 13, la rotation de tige 5 provoque la rotation simultanée des arbres 3, et ce avec une même amplitude. La tige 5 est préférablement prévue pour coopérer par cannelure le long de toute sa longueur. Cette coopération par cannelure 13 permet un mouvement axial relatif entre les arbres 3 et la tige 5, sur laquelle ils peuvent glisser, entraînés par l'un ou l'autre bloc 2, tout en restant engrenés pour un entraînement en rotation.

La tige 5 traverse donc tous les blocs 2 successifs et peut tourner axialement par rapport à eux, sa rotation provoquant à son tour celle des arbres 3 successifs. Comme il a déjà été dit, la rotation d'un arbre 3 entre deux blocs 2 aura ensuite pour effet, de par le montage par filetage et taraudage dans l'un des blocs 2, de rapprocher ce dernier de l'autre bloc 2. Grâce au montage par cannelure 13, la tige 5 et les arbres 3 sont solidaires en rotation autour de leur axe commun. Les blocs 2 peuvent cependant coulisser axialement le long de la tige 5 pour suivre le mouvement des blocs 2.

De façon préférable, au moins l'un des blocs 2 est fixe dans le bâti 14 et forme une référence, les autres étant mobiles par rapport à lui. Ce bloc 2 fixe, ou bloc de référence, peut ne pas être monté sur la glissière 12 mais directement sur le bâti 14. La tige 5 est bloquée en translation axiale par rapport au bâti 14, mais libre en rotation.

La manoeuvre va maintenant être décrite de façon simple pour un dispositif d'ajustement 1 qui comprend une succession de quatre blocs 2, comme dans la figure 2, traversés par une tige 5 coopérant par cannelure 13 avec trois arbres 3.

Dans la première réalisation, le premier bloc 2, au bas de la figure 2, est fixe par rapport au bâti 14 et est relié au bloc 2 suivant, ou deuxième bloc 2, par un premier arbre 3 qui est retenu en translation dans le premier bloc 2 et monté par filetage et taraudage dans le deuxième bloc 2. La rotation de la tige 5 a pour effet, par cannelure 13, de faire tourner le premier arbre 3 dans le premier bloc 2, et, compte tenu du filetage entre lui et le deuxième bloc 2, de rapprocher le deuxième bloc 2 du premier.

Ce déplacement de translation axiale du deuxième bloc 2 a pour effet de provoquer le même déplacement du troisième bloc 2 : en effet, le deuxième bloc 2 et le troisième bloc 2 sont reliés par un deuxième arbre 3, qui, étant retenu axialement dans le deuxième bloc 2 et monté par filetage et taraudage dans le troisième bloc 2, déplace aussi le troisième bloc 2 en direction du premier même s'il ne subit aucune rotation. Si le deuxième arbre 3 ne subit aucune rotation, il maintient l'écartement entre le deuxième bloc 2 et le troisième.

Un montage similaire est prévu entre le troisième bloc 2 et le quatrième, si bien que le quatrième bloc 2 subit lui aussi le déplacement en direction du premier bloc 2, provoqué uniquement par la rotation du premier arbre 3 et le montage des deuxième et troisième arbres 3.

Le montage par cannelure 13 entre les arbres 3 et la tige 5 permet aux arbres 3 de se translater le long de cette tige 5 tout en restant entraînés par elle en rotation axiale. Ainsi, la rotation de la tige 5 a non seulement pour effet de provoquer la rotation du premier arbre 3 telle que décrite ci-dessus, mais aussi une rotation similaire du deuxième arbre 3, entre le deuxième bloc 2 et le troisième. Le deuxième arbre 3 subit donc simultanément tant une translation axiale provoquée par le déplacement du deuxième bloc 2 déjà décrit qu'une rotation axiale provoquée par la tige 5, similaire à celle que cette dernière provoque au niveau du premier arbre 3.

De par le montage par filetage et taraudage entre le troisième bloc 2 et le deuxième arbre 3, la rotation de ce dernier a pour effet de rapprocher le troisième bloc 2 du deuxième, jusqu'au même écartement que celui entre le premier et le deuxième bloc 2, compte tenu de l'égalité des pas et de l'amplitude de rotation. On comprend donc que le troisième bloc 2 s'approche du premier bloc 2 d'une valeur qui résulte tant de la rotation du premier arbre 3 et de la translation du deuxième bloc 2 qu'elle provoque que de la rotation équivalente du deuxième arbre 3.

Le montage bloqué en translation axiale entre le troisième bloc 2 et le quatrième fait que, même sans rotation du troisième arbre 3 qui les relie, la translation du troisième bloc 2 en direction du premier entraîne de la même façon le quatrième bloc 2.

Le quatrième bloc 2 subit donc à son tour le déplacement axial du troisième bloc 2, de par le blocage axial du troisième arbre 3 entre le troisième bloc 2 et le quatrième. Comme pour les autres cas, la rotation du troisième arbre 3 rajoute à ce déplacement une composante provenant du montage par filetage dans le quatrième bloc 2.

De façon générale, un bloc 2 subit donc un déplacement axial le long de la tige 5 qui résulte du montage par filetage et taraudage de chaque arbre 3 qui le relie au bloc 2 de référence. L'éloignement entre chaque paire de blocs 2 dépend cependant uniquement de la rotation de l'arbre 3 qui le relie. Le montage glissant, par cannelure 13, des arbres 3 le long de la tige 5, ainsi que le montage des arbres 3 dans les deux blocs 2 successifs assure le déplacement axial d'un bloc 2 même sans rotation de l'arbre 3 qui le relie au bloc 2 précédent.

La manoeuvre décrite ci-dessus correspond à la situation où le premier bloc 2 est fixé et immobile dans le bâti 14. Dans des montages alternatifs, le bloc 2 fixe peut être un bloc 2 central et non un bloc d'extrémité. Le descriptif ci-dessous correspond ainsi au cas où le bloc 2 fixe est le deuxième.

La rotation de la tige 5 fait tourner simultanément tous les arbres 3. De par le montage par filetage et taraudage, respectivement, du premier arbre 3 dans le premier bloc 2 et du deuxième arbre 3 dans le troisième bloc 2, ces deux blocs 2 se déplacent par rapport au deuxième. La distance qui sépare le bloc 2 fixe du premier bloc 2 et du troisième bloc 2 est la même. Le quatrième bloc 2 est translaté tant par la relation vis-écrou entre lui et le troisième arbre 3 que par la translation du troisième bloc 2 répercutée au quatrième bloc 2 par le troisième arbre 3 directement, grâce à l'engrènement axial que représente la liaison filetage et taraudage.

De façon avantageuse, la tige 5 est mise en rotation par un moteur embarqué sur le bâti 14 et les cannelures 13 s'étendent sur toute sa longueur. Comme la tige 5 est au coeur des arbres 3, elle traverse aussi les blocs 2 successifs.

Grâce à l'invention, il est ainsi possible d'obtenir une solution d'ajustement en fonction des dimensions de produits qui soit précise, compacte et contrôlable.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus mais faisant tout de même objet des revendications suivantes.

## Revendications

1. Dispositif d'ajustement (1), comprenant au moins deux blocs (2) côte à côte, mobiles l'un par rapport à l'autre dans une direction d'extension (11) et destinés à coopérer, directement ou indirectement, avec des produits (7) d'une ligne industrielle de traitement, ledit dispositif d'ajustement comprend un moyen d'entraînement (4), pour régler la position relative d'au moins deux blocs (2), ledit moyen d'entraînement (4) comprenant, pour chaque paire de deux blocs (2) successifs, un arbre (3) monté par une de ses extrémités dans l'un des deux blocs (2) en y étant maintenu axialement et libre en rotation, et coopérant avec l'autre bloc (2) par filetage au niveau de son autre extrémité,
**caractérisé en ce que**
il comprend au moins trois blocs (2), reliés entre eux par des arbres (3) dont le filetage a le même pas, le moyen d'entraînement (4) assurant un même entraînement des arbres (3) montés entre deux blocs (2) successifs où le moyen d'entraînement (4) comprend une tige (5) tournante qui engrène les arbres (3).

2. Dispositif d'ajustement (1) selon la revendication 1, comprenant une glissière (12) parallèle à l'arbre (3) et sur laquelle les blocs (2) sont montés mobiles.

3. Dispositif d'ajustement (1) selon la revendication 1 ou 2, où
la tige (5) s'étend axialement au sein des arbres (3), et les engrène grâce à des cannelures (13) correspondantes, aménagées à l'intérieur des arbres (3) et à la périphérie de la tige (5), préférablement sur toute sa longueur, la tige (5) étant mobile axialement au sein des arbres (3) tout en maintenant l'engrènement.

4. Dispositif d'ajustement (1) selon l'une quelconque des revendications 1 à 3, **caractérisé en ce que**
le dispositif d'entraînement (4) comprend, en outre, un moteur (15) pour provoquer la rotation de l'au moins un arbre (3), en agissant préférablement par entraînement en rotation de la tige (5).

5. Dispositif d'ajustement (1) selon l'une quelconque des revendications 1 à 4, **caractérisé en ce que**
il comprend au moins trois blocs (2), alignés, l'un des blocs (2) servant de référence et demeurant immobile par rapport au bâti (14) lors d'une modification de l'écartement, ledit bloc (2) de référence recevant deux arbres (3) en vis-à-vis qui sont bloqués en translation axialement mais libres en rotation.

6. Tête de préhension (6) de produits (7), pour être montée sur un manipulateur type robot et qui saisit des produits (7) alignés les uns à côté des autres, comprenant un ensemble de préhenseurs (10) pour saisir simultanément les produits (7), tête de préhension (6) **caractérisée en ce que**
elle comprend un dispositif d'ajustement (1) selon l'une quelconque des revendications 1à 5 où les préhenseurs (10) sont montés sur les blocs (2).

7. Moyen de convoyage (8) de produits (7) en colonnes, les uns derrière les autres, entre des parois (9) délimitant ensemble plusieurs colonnes parallèles s'étendant dans le sens de convoyage, au sein d'une ligne de conditionnement de produits (7),
**caractérisé en ce que**
il comprend un dispositif d'ajustement (1) selon l'une quelconque des revendications 1 à 6 où les parois (9) sont montées sur les blocs (2), la direction d'extension (11) se trouvant perpendiculaire au sens de convoyage.

8. Procédé d'ajustement relatif en position de blocs (2) positionnés les uns à côté des autres, visant à garantir un écartement relatif homogène dans une direction d'extension (11) entre deux blocs (2) successifs destinés à coopérer directement ou non avec des produits (7) d'une ligne industrielle de traitement,
la modification de la position entre deux blocs (2) successifs se fait par rotation d'un arbre (3) monté entre eux en butée axiale dans l'un et formant un assemblage fileté avec l'autre,
**caractérisé en ce que**
les arbres (3) séparant deux blocs (2) successifs ont le même pas et, lors du réglage, sont entraînés avec la même amplitude de mouvement de rotation, de sorte que la distance entre deux blocs (2) successifs est la même.

## Patentansprüche

1. Einstellvorrichtung (1), umfassend mindestens zwei nebeneinanderliegende Blöcke (2), die in einer Erstreckungsrichtung (11) relativ zueinander beweglich und dazu bestimmt sind, direkt oder indirekt mit Produkten (7) einer industriellen Verarbeitungslinie zusammenzuwirken, wobei die Einstellvorrichtung ein Antriebsmittel (4) umfasst, um die relative Position von mindestens zwei Blöcken (2) einzustellen, wobei das Antriebsmittel (4) für jedes Paar aus zwei aufeinanderfolgenden Blöcken (2) eine Welle (3) umfasst, die mit einem ihrer Enden in einem der beiden Blöcke (2) montiert ist, wo sie axial und frei drehbar gehalten wird, und die mit dem anderen Block (2) durch ein Gewinde an ihrem anderen Ende zusammenwirkt,
**dadurch gekennzeichnet, dass**
sie mindestens drei Blöcke (2) umfasst, die durch Wellen (3) miteinander verbunden sind, deren Gewinde die gleiche Steigung haben, wobei das Antriebsmittel (4) einen gleichen Antrieb der zwischen zwei aufeinanderfolgenden Blöcken (2) montierten Wellen (3) gewährleistet, wobei das Antriebsmittel (4) eine drehbare Stange (5) umfasst, die in die Wellen (3) eingreift.

2. Einstellvorrichtung (1) nach Anspruch 1, umfassend eine Führung (12), die parallel zur Welle (3) verläuft und auf der die Blöcke (2) beweglich montiert sind.

3. Einstellvorrichtung (1) nach Anspruch 1 oder 2, wobei sich die Stange (5) axial innerhalb der Wellen (3) erstreckt und mit diesen durch entsprechende Rillen (13) in Eingriff steht, die im Inneren der Wellen (3) und am Umfang der Stange (5), vorzugsweise über deren gesamte Länge, vorgesehen sind, wobei die Stange (5) innerhalb der Wellen (3) axial beweglich ist, während der Eingriff aufrechterhalten wird.

4. Einstellvorrichtung (1) nach einem der Ansprüche 1 bis 3, **dadurch gekennzeichnet, dass**
die Antriebsvorrichtung (4) ferner einen Motor (15) umfasst, um die Drehung der mindestens einen Welle (3) zu bewirken, wobei sie vorzugsweise durch Drehantrieb der Stange (5) wirkt.

5. Einstellvorrichtung (1) nach einem der Ansprüche 1 bis 4, **dadurch gekennzeichnet, dass**
sie mindestens drei ausgerichtete Blöcke (2) umfasst, wobei einer der Blöcke als Referenz dient und bei einer Änderung des Abstands in Bezug auf das Gestell (14) unbeweglich bleibt, wobei der Referenzblock (2) zwei einander gegenüberliegende Wellen (3) aufnimmt, die gegen axiale Translation blockiert aber frei drehbar sind.

6. Kopf (6) zum Greifen von Produkten (7) für die Montage an einem roboterartigen Manipulator, der nebeneinander ausgerichtete Produkte (7) greift, umfassend eine Anordnung von Greifern (10) zum gleichzeitigen Greifen der Produkte (7), wobei der Greifkopf (6) **dadurch gekennzeichnet ist, dass** er eine Einstellvorrichtung (1) nach einem der Ansprüche 1 bis 5 umfasst, wobei die Greifer (10) an den Blöcken (2) montiert sind.

7. Mittel (8) zum Fördern von in Spalten hintereinander angeordneten Produkten (7) zwischen Wänden (9), die zusammen mehrere parallele Spalten begrenzen, die sich in Förderrichtung erstrecken, innerhalb einer Verpackungslinie für Produkte (7),
**dadurch gekennzeichnet, dass**
es eine Einstellvorrichtung (1) nach einem der Ansprüche 1 bis 6 umfasst, wobei die Wände (9) an den Blöcken (2) montiert sind, wobei die Erstreckungsrichtung (11) senkrecht zur Förderrichtung verläuft.

8. Verfahren zur relativen Positionseinstellung von nebeneinander positionierten Blöcken (2), das einen homogenen relativen Abstand in einer Erstreckungsrichtung (11) zwischen zwei aufeinanderfolgenden Blöcken (2) gewährleisten soll, die dazu bestimmt sind, direkt oder indirekt mit Produkten (7) einer industriellen Verarbeitungslinie zusammenzuwirken,
wobei die Änderung der Position zwischen zwei aufeinanderfolgenden Blöcken (2) durch Drehung einer Welle (3) erfolgt, die zwischen ihnen mit einem axialen Anschlag in einem Block montiert ist und mit dem anderen Block eine Gewindeverbindung bildet,
**dadurch gekennzeichnet, dass**
die Wellen (3), die zwei aufeinanderfolgende Blöcke (2) trennen, die gleiche Steigung haben und beim Einstellen mit der gleichen Amplitude der Drehbewegung angetrieben werden, sodass der Abstand zwischen zwei aufeinanderfolgenden Blöcken (2) der gleiche ist.

## Claims

1. Adjustment device (1), comprising at least two blocks (2) side by side which are movable with respect to one another in an extension direction (11) and are intended to cooperate, directly or indirectly, with products (7) of an industrial processing line, said adjustment device comprises a drive means (4), for adjusting the relative position of at least two blocks (2), said drive means (4) comprising, for each pair of two successive blocks (2), a shaft (3) which is mounted by one of its ends in one of the two blocks (2) by being held there axially and free to rotate, and cooperates with the other block (2) by threading at its other end,
**characterized in that**
it comprises at least three blocks (2) which are connected to one another by shafts (3) whose threading has the same pitch, the drive means (4) ensuring the same driving of the shafts (3) mounted between two successive blocks (2), wherein the drive means (4) comprises a rotating rod (5) which engages with the shafts (3).

2. Adjustment device (1) according to Claim 1, comprising a slideway (12) which is parallel to the shaft (3) and on which the blocks (2) are movably mounted.

3. Adjustment device (1) according to Claim 1 or 2, wherein the rod (5) extends axially within the shafts (3), and engages with them by virtue of corresponding splines (13) provided inside the shafts (3) and at the periphery of the rod (5), preferably over its entire length, the rod (5) being movable axially within the shafts (3) while maintaining the engagement.

4. Adjustment device (1) according to any one of Claims 1 to 3, **characterized in that**
the drive device (4) further comprises a motor (15) for bringing about the rotation of the at least one shaft (3), by preferably effecting rotational driving of the rod (5).

5. Adjustment device (1) according to any one of Claims 1 to 4, **characterized in that**
it comprises at least three aligned blocks (2), one of the blocks (2) serving as a reference and remaining immobile with respect to the frame (14) during a modification of the spacing, said reference block (2) receiving two opposite shafts (3) which are immobilized in translation axially but free to rotate.

6. Gripping head (6) for gripping products (7), for being mounted on a robot-type manipulator and which grips products (7) aligned alongside one another, comprising a set of grippers (10) for simultaneously gripping the products (7), gripping head (6), **characterized in that**
it comprises an adjustment device (1) according to any one of Claims 1 to 5, wherein the grippers (10) are mounted on the blocks (2).

7. Conveying means (8) for conveying products (7) in rows, one behind the other, between walls (9) which together delimit several parallel rows extending in the conveying direction, within a line for conditioning products (7),
**characterized in that**
it comprises an adjustment device (1) according to any one of Claims 1 to 6, wherein the walls (9) are mounted on the blocks (2), the extension direction (11) being perpendicular to the conveying direction.

8. Method for the relative adjustment of the position of blocks (2) positioned alongside one another, aiming to ensure a homogeneous relative spacing in an extension direction (11) between two successive blocks (2) intended to cooperate directly or indirectly with products (7) of an industrial processing line,
the position between two successive blocks (2) being modified by rotation of a shaft (3) mounted between said blocks in axial abutment in one block and forming a threaded assembly with the other block,
**characterized in that**
the shafts (3) separating two successive blocks (2) have the same pitch and, during the adjustment, are driven with the same rotational movement amplitude, such that the distance between two successive blocks (2) is the same.
